## Europäisches Patentamt

## European Patent Office

## Office européen des brevets

(19)

(11) Veröffentlichungsnummer: **0 201 760**
**B1**

(12) # EUROPÄISCHE PATENTSCHRIFT

(45) Veröffentlichungstag der Patentschrift:
08.06.88

(21) Anmeldenummer: **86105441.9**

(22) Anmeldetag: **19.04.86**

(51) Int. Cl.⁴: **F 16 D 65/12,** F 16 D 65/10,
F 16 D 13/64

(54) Reibring, insbesondere für Scheiben- oder Trommelbremsen.

(30) Priorität: **30.04.85 DE 3515512**

(43) Veröffentlichungstag der Anmeldung:
**20.11.86 Patentblatt 86/47**

(45) Bekanntmachung des Hinweises auf die Patenterteilung:
**08.06.88 Patentblatt 88/23**

(84) Benannte Vertragsstaaten:
**DE FR GB IT SE**

(56) Entgegenhaltungen:
**EP-A-0 077 137**
**EP-A-0 099 195**
**DE-A-2 010 099**
**DE-A-2 110 482**
**DE-A-2 151 061**
**DE-A-2 201 885**
**DE-A-2 458 335**
**DE-A-2 539 361**
**DE-A-2 637 634**
**DE-A-2 744 725**
**DE-A-3 227 661**
**DE-C-2 113 036**
**DE-C-2 637 634**
**DE-C-3 425 678**
**FR-A-2 357 789**
**FR-A-2 541 741**
**GB-A-1 052 636**
**GB-A-1 200 610**

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Koydl, Ladislav, Dipl.- Ing., Strassberger Strasse 125, D-8000 München 40 (DE)**

(74) Vertreter: **Draeger, Karlfried, Bayerische Motoren Werke Aktiengesellschaft Postfach 40 02 40 Petuelring 130 - AJ 36, D-8000 München 40 (DE)**

(56) Entgegenhaltungen: (Fortsetzung)
**US-A-3 927 740**

EP 0 201 760 B1

## Beschreibung

Die Erfindung bezieht sich auf einen Reibring, insbesondere für Scheiben- oder Trommelbremsen aus einem gesinterte Keramik enthaltenden Material.

Die Praxis hat gezeigt, daß die verwendeten Materialien für die Bremsscheiben von Scheibenbremsen bzw. für den Bremsring von Trommelbremsen die an sie gestellten Forderungen hinsichtlich wärmephysikalischer Eigenschaften und Gewicht nicht optimal erfüllen. So werden z. B. die technischen Kennwerte einer Bremse vermindert, wenn ihre Betriebstemperatur steigt. Um die Arbeitsfähigkeit der Bremse zu sichern, muß daher das Volumen des verwendeten Materials erhöht werden, was eine Erhöhung des Gewichts und der Abmessungen der Bremse im Ganzen zur Folge hat. Das verwendete Material muß dabei während der kurzen Bremszeit eine große Wärmeenergiemenge unter Betriebsbedingungen aufnehmen. Dies gilt insbesondere, wenn mehrere Vollbremsungen kurz hintereinander durchgeführt werden. An das Material des Reibrings einer Bremse sind daher folgende Forderungen zu stellen: hohe spezifische Wärmekapazität, hohe zulässige Betriebstemperatur, hohe Hitzebeständigkeit, hohe Wärmeleitfähigkeit, geringe Dichte und geringer Verschleiß der Bremsbeläge.

Aus der DE-C-2 637 634 ist ein gesintertes Material für Bremsen bekannt, das aus Kohlenstoff, einer Metallkomponente, nämlich Kupfer, und einer Keramikkomponente in Form von Borcarbid, Titandiborid und Siliciumcarbid besteht. Bei vorgegebenem Gewicht läßt die zulässige Betriebstemperatur der Bremse mit dem bekannten Material jedoch noch zu wünschen übrig. So besitzt es den Nachteil, daß bei höheren Betriebstemperaturen die Verbrennung des Kohlenstoffs einsetzt. Weiterhin besitzt Kupfer einen viel größeren Ausdehnungskoeffizienten als die Keramikkomponente. Das Kupfer übt dadurch bei hohen Betriebstemperaturen einen hohen Druck auf die Keramikkomponente aus, was zur Bildung von Rissen in der Keramikkomponente führt.

Das Problem der Rißbildung der Keramikkomponente tritt auch bei der Beschichtung der Reibflächen von Metall-Bremsscheiben mit sogenannten Cermets auf, d.h. mit Materialien, die aus einer Keramik- und einer Metallkomponente bestehen, wie z. B. aus der DE-A-2 744 725, DE-A-3 227 661, DE-C-2 113 036 und EP-A-99 195 bekannt. Diese Beschichtungen besitzen den zusätzlichen Nachteil, daß der unterschiedliche Wärmeausdehnungskoeffizient der Cermet-Beschichtung gegenüber der Metall-Bremsscheibe zu Abplatzungen der Beschichtung führt. Darüberhinaus sind die Beschichtungsverfahren, wie die Plasmabeschichtung, elektrochemische Beschichtung oder Kaltpreßschweißen relativ aufwendig.

Aus der DE-A- 2 201 885 ist eine Bremsscheibe bekannt, bei der ein Reibring aus Kohlenstoffasern zwischen einem Klemmring und einer Nabe mittels Schrauben befestigt ist, die sich durch schlitzförmige Ausnehmungen am Innenumfang des Reibrings erstrecken.

Der Erfindung liegt die Aufgabe zugrunde, einen Reibring anzugeben, der bei geringem Gewicht und geringem Verschleiß der Bremsbeläge eine hohe Temperatur- und Formbeständigkeit besitzt.

Diese Aufgabe wird durch einen Reibring gelöst, der ausschließlich aus Keramik besteht. Der erfindungsgemäße Reibring enthält also weder eine Metallkomponente noch eine andere Nichtkeramik-Komponente.

Die Keramik besteht dabei vorzugsweise ausschließlich aus sogenannter Sonderkeramik. Jedoch kann auch ein Teil der Keramik als Oxidkeramik vorliegen. Dies gilt insbesondere dann, wenn die Teilchen der Sonderkeramik mit einer einen niedrigeren Schmelzpunkt aufweisenden Oxidkeramik beschichtet sind, wie dies in der älteren deutschen Patentschrift 3 425 678 beschrieben ist.

Unter Oxidkeramik sind dabei Metalloxide wie Aluminiumoxid, Zirkoniumoxid, Magnesiumoxid oder Yttriumoxid zu verstehen und unter Sonderkeramik Carbide, Nitride, Silicide und Boride, wie Siliciumcarbid, Siliciumnitrid, Borcarbid oder Bornitrid.

Der Anteil der Oxidkeramik soll jedoch nicht mehr als 50 Gewichtsprozent, vorzugsweise nicht mehr also 30 Gewichtsprozent betragen. Eine Oxidkeramik, wie Aluminiumoxid, besitzt nämlich eine relativ schlechte Wärmeleitfähigkeit.

Als Sonderkeramik wird dabei Siliumcarbid bevorzugt, da es eine hohe Wärmeleitfähigkeit, einen hohen Verschleißwiderstand und einen hohen Elastizitätsmodul besitzt. Jedoch ist auch ein Gemisch aus Siliciumcarbid und Siliciumnitrid einsetzbar, wobei der Siliciumnitridanteil höchstens 70 %, vorzugsweise höchstens 40 % betragen soll.

Die Herstellung des erfindungsgemäßen Reibrings erfolgt vorzugsweise folgendermaßen:

Aus einer Keramik, wie Siliciumcarbid-Pulver, wird durch Sintern unter Druck nach üblichen Verfahren ein Rohling hergestellt, dessen Reibflächen geschliffen und auf eine Rauhigkeit Ra von mindestens 0,3 μm geläppt werden. In den Reibflächen des Reibrings können dabei zum Außenumfang hin verlaufende Nuten eingearbeitet werden. Auch wird der Reibring an seinem Innenumfanag mit sich radial erstreckenden konkaven Ausnehmungen versehen. Der Ring wird dann in eine Nabe aus Leichtmetall, beispielsweise aus einer Aluminium- oder Magnesiumlegierung eingegossen, und zwar durch Kokillenguß, Druckguß oder andere übliche Gießverfahren. Das Schleifen und Läppen der Reibflächen zur Herabsetzung von deren Rauhigkeit ist erforderlich, um den Verschleiß der Bremsbeläge herabzusetzen.

Nachstehend ist die Erfindung anhand der Zeichnung beispielsweise erläutert. Darin zeigen:

Figur 1 einen Schnitt durch eine Bremsscheibe einer Scheibenbremse;

Figur 2 eine Seitenansicht eines Teils der Bremsscheibe nach Figur 1; und

Figur 3 schematisch einen Schnitt durch einen Teil des mit einem Reibring versehenen Bremsgehäuses einer Trommelbremse.

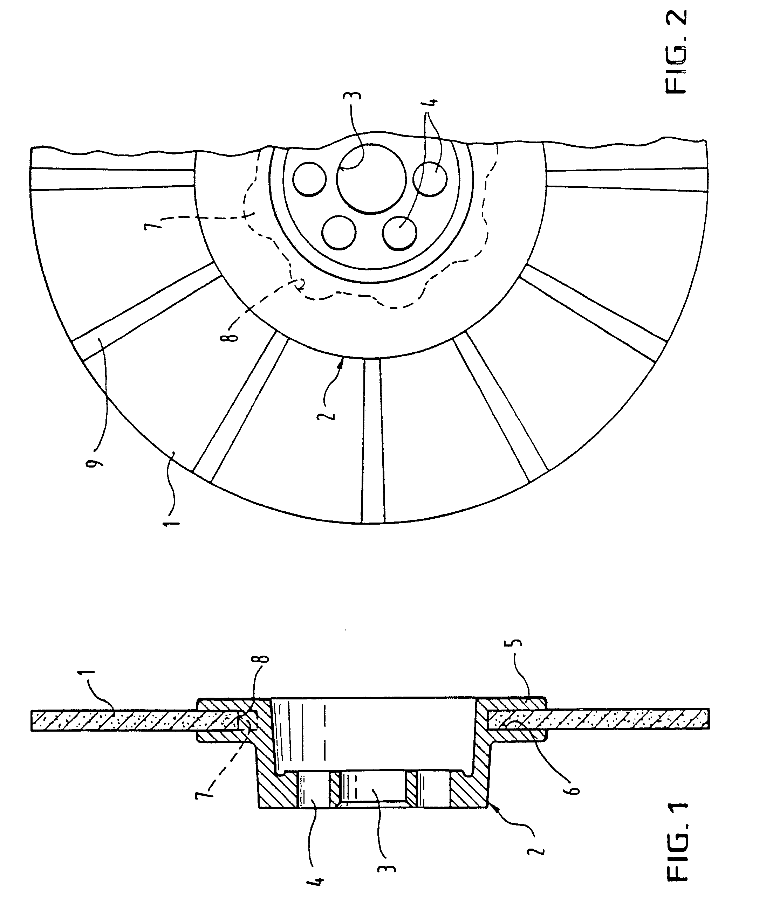

Gemäß Figur 1 besteht die Bremsscheibe aus einem Reibring 1, der in eine topfförmige Nabe 2 eingegossen ist. Der Reibring 1 besteht völlig aus gesinterter Keramik, z. B. Siliciumcarbid. Die Nabe 2 besteht aus Leichtmetall, wie einer Aluminium- oder einer Magnesiumlegierung.

Die Nabe 2 ist mit einer zentrischen Ausnehmung 3 für den Durchtritt eines in der Zeichnung nicht dargestellten Achsschenkels und mit einem Lochkranz 4 zur Befestigung an einer in der Zeichnung ebenfalls nicht dargestellten Radfelge versehen. Am Außenrand der topfförmigen Nabe 2 ist ein Flansch 5 vorgesehen, der eine Ringnut 6 aufweist, in die sich der Reibring 1 erstreckt und darin gehalten wird. Zur drehfesten Verbindung des Reibrings 1 mit der Nabe 2 sind in der Ringnut 6 gleichmäßig verteilt konvexe Vorsprünge 7 vorgesehen, die in entsprechende Ausnehmungen 8 am Innenumfang des Reibrings 1 eingreifen. Die Ausnehmungen 8 am Reibring 1 sind konkav ausgebildet, d. h. ohne Ecken, um Spannungskonzentrationen und damit Risse in dem Vollkeramikreibring 1 zu verhindern.

Weiterhin ist der Reibring 1 mit Nuten 9 versehen, die sich, wie in Figur 2 dargestellt, radial oder in einer anderen Form, z. B. tangential oder spiralförmig zum Außenumfang des Reibrings 1 erstrecken. Der erfindungsgemäße Vollkeramikreibring muß nämlich relativ glatt sein, damit kein zu großer Verschleiß der Bremsbeläge auftritt, wobei seine Eigenschaften auch bei sich ändernden Umwelteinflüssen, wie Wärme oder Feuchtigkeit, konstant bleiben soll. Die geringe Rauhigkeit hat allerdings zur Folge, daß ein Flüssigkeitsfilm oder kleine Partikel zu einer Veränderung der Reibungsverhältnisse führen können. Ein solcher Film bzw. derartige Partikel werden beim Bremsen von den Nuten 9 aufgenommen und durch diese entfernt.

Die radialen Nuten 9 sind dabei keilförmig zum Außenumfang des Keramikreibrings 1 verbreitert. Dadurch wird beim Eingießen des Reibrings in das Leichtmetall eine höhere Haltekraft gegenüber Zentrifugalkräften erzeugt. Weiterhin sind die radialen Nuten 9 vorzugsweise konkav, d. h. ohne Ecken ausgebildet, um Spannungskonzentrationen zu vermeiden. Um eine zu große Verminderung der Dicke des Reibrings zu vermeiden, sind die Nuten 9 ferner auf beiden Reibflächen des Reibrings 1 versetzt zueinander angeordnet.

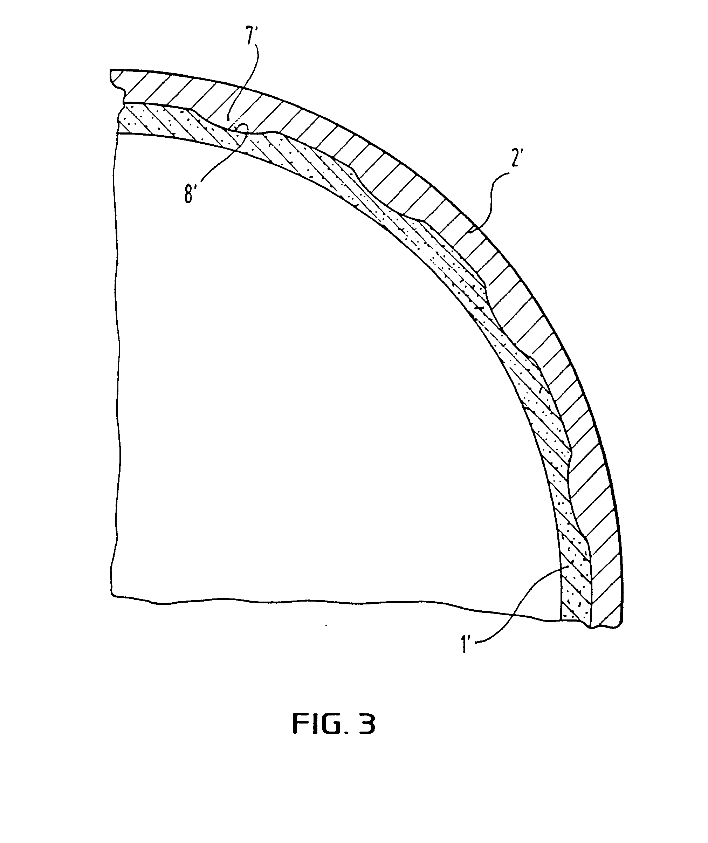

Bei der Trommelbremse gemäß Figur 3 ist der Reibring 1' aus gesinterter Keramik in das Bremsgehäuse 2' aus Leichtmetall eingegossen.

Um eine drehfeste Verbindung zwischen Reibring 1' und Bremsgehäuse 2' zu erreichen, ist dabei das Bremsgehäuse 2' am Innenumfang mit konkaven Vorsprüngen 7' und der Reibring 1' am Außenumfang mit konvexen Ausnehmungen 8' versehen, wobei die Vorsprünge 7' und die Ausnehmungen 8' ineinander greifen.

Der erfindungsgemäße Reibring ist nicht nur für Scheiben- und Trommelbremsen geeignet sondern für jedes tribologisch hochbelastete System, wie z. B. Kupplungsscheiben.

Es sind zahlreiche Variationen der vorstehend anhand der Zeichnungen geschilderten Ausführungsformen möglich, z. B. sind die Nuten 9 durch Löcher in dem Reibring ganz oder teilweise ersetzbar.

**Patentansprüche**

1. Reibring, insbesondere für Scheiben- oder Trommelbremsen aus einem gesinterte Keramik enthaltenden Material, dadurch gekennzeichnet, daß der Reibring (1, 1') ausschließlich aus Keramik besteht.

2. Reibring nach Anspruch 1, dadurch gekennzeichnet, daß die Keramik aus mehr als 50 Gewichtsprozent Sonderkeramik und höchstens 50 Gewichtsprozent Oxidkeramik besteht.

3. Reibring nach Anspruch 1, dadurch gekennzeichnet, daß die Keramik ausschließlich aus Sonderkeramik besteht.

4. Reibring nach Anspruch 2 oder 3, dadurch gekennzeichnet, daß die Sonderkeramik Siliciumcarbid oder ein Gemisch aus Siliciumcarbid und Siliciumnitrid mit einem Siliciumcarbidanteil von mindestens 50 Gewichtsprozent ist.

5. Reibring nach einem der vorstehenden Ansprüche für eine Scheibenbremse, dadurch gekennzeichnet, daß er in eine Nabe (2) aus Leichtmetall eingegossen ist.

6. Reibring nach Anspruch 5, dadurch gekennzeichnet, daß in den Reibflächen des Reibrings (1) sich zum Außenumfang erstreckende Nuten (9) vorgesehen sind.

7. Reibring nach einem der Ansprüche 1 bis 4 für eine Trommelbremse, dadurch gekennzeichnet, daß er in das Bremsgehäuse (2') der Trommelbremse eingegossen ist.

8. Reibring nach einem der Ansprüche 5 bis 7, dadurch gekennzeichnet, daß bei der Scheibenbremse der Innenumfang des Reibrings (1) mit radialen Ausnehmungen (8) und der Außenumfang der Nabe (2) mit Vorsprüngen (7) bzw. bei der Trommelbremse der Außenumfang des Reibrings (1') mit radialen Ausnehmungen (8') und der Innenumfang des Bremsgehäuses (2') mit Vorsprüngen (7') versehen ist, wobei die Ausnehmungen (8, 8') und die Vorsprünge (7, 7') ineinandergreifen.

9. Bremsscheibe nach Anspruch 8, dadurch gekennzeichnet, daß die Ausnehmungen (8, 8') konkav und die Vorsprünge (7, 7') konvex ausgebildet sind.

10. Verfahren zur Herstellung des Reibrings nach einem der Ansprüche 1 bis 9, <u>dadurch gekennzeichnet</u>, daß er nach üblichem Verfahren ausschließlich aus Keramik durch Sintern hergestellt wird, wobei die Reibflächen des gesinterten Reibrings nachgeschliffen werden.

11. Verfahren nach Anspruch 10, <u>dadurch gekennzeichnet</u>, daß die Reibflächen des Reibrings bis auf eine Rauhigkeit (Ra) von weniger als 2 µm, vorzugsweise weniger als 0,3 µm geschliffen werden.

12. Verfahren nach Anspruch 10 oder 11, <u>dadurch gekennzeichnet</u>, daß der Reibring nach üblichen Verfahren in eine Nabe bzw. ein Bremsgehäuse aus Leichtmetall eingegossen wird.

## Claims

1. A friction ring, especially for disc or drum brakes of a material containing sintered ceramic material, characterised in that the friction ring (1, 1') consists exclusively of ceramic material.

2. A friction ring according to Claim 1, characterised in that the ceramic material consists of more than 50 % weight special ceramic material and at most 50 % weight oxide ceramic material.

3. A friction ring according to Claim 1, characterised in that the ceramic material consists exclusively of special ceramic material.

4. A friction ring according to Claim 2 or 3, characterised in that the special ceramic material is silicon carbide or a mixture of silicon carbide and silicon nitride with a silicon carbide proportion of at least 50 % weight.

5. A friction ring according to any one of the preceding Claims for a disc brake, characterised in that it is cast into a hub (2) of light metal.

6. A friction ring according to Claim 5, characterised in that grooves (9) extending to the external circumference are provided in the friction faces of the friction ring (1).

7. A friction ring according to any one of Claims 1 to 4 for a drum brake, characterised in that it is cast into the brake housing (2') of the drum brake.

8. A friction ring according to any one of Claims 5 to 7, characterised in that, in the case of the disc brake, the internal circumference of the friction ring (1) is provided with radial recesses (8) and the external circumference of the hub (2) is provided with projections (7) and, in the case of the drum brake, the external circumference of the friction ring (1') is provided with radial recesses (8') and the internal circumference of the brake housing (2') is provided with projections (7'), the recesses (8, 8') and the projections (7, 7') interengaging.

9. A brake disc according to Claim 8, characterised in that the recesses (8, 8') are made concave and the projections (7, 7') are made convex.

10. A process for the production of the friction ring according to any one of Claims 1 to 9, characterised in that, in accordance with usual processes, it is produced exclusively from ceramic material by sintering, and the friction faces of the sintered friction ring are re-ground.

11. A process according to Claim 10, characterised in that the friction faces of the friction ring are ground down to a roughness (Ra) of less than 2 µm., preferably less than 0.3 µm.

12. A process according to Claim 10 or 11, characterised in that the friction ring is cast in accordance with usual processes into a hub or a brake housing of light metal.

## Revendications

1. Anneau de friction, notamment pour freins à disque ou bien freins à tambour, en un matériau contenant de la céramique frittée, caractérisé en ce que l'anneau de friction (1, 1') se compose exclusivement de céramique.

2. Anneau de friction selon la revendication 1, caractérisé en ce que la céramique se compose de plus de 50 % en poids de céramique spéciale et au plus de 50 % en poids de céramique à oxyde.

3. Anneau de friction selon la revendication 1, caractérisé en ce que la céramique se compose exclusivement de céramique spéciale.

4. Anneau de friction selon la revendication 2 ou 3, caractérisé en ce que la céramique spéciale est du carbure de silicium, ou bien un mélange de carbure de silicium et de nitrure de silicium, avec un pourcentage de carbure de silicium d'au moins 50 % en poids.

5. Anneau de friction selon l'une des revendications précédentes, pour un frein à disque, caractérisé en ce qu'il est coulé dans un moyeu (2) en métal léger.

6. Anneau de friction selon la revendication 5, caractérisé en ce que des rainures (9), s'étendant à la périphérie extérieure, sont prévues dans les surfaces de friction de l'anneau de friction (1).

7. Anneau de friction selon l'une des revendications 1 à 4, pour un frein à tambour, caractérisé en ce qu'il est coulé dans le carter de frein (2') du frein à tambour.

8. Anneau de friction selon l'une des revendications 5 à 7, caractérisé en ce que dans le cas de frein à disque, la périphérie intérieure de l'anneau de friction (1) possède des évidements (8) radiaux et la périphérie extérieure du moyeu (2) possède des saillies (7), respectivement dans le cas du frein à tambour, la périphérie extérieure de l'anneau de friction (1') possède des évidements radiaux (8') et la périphérie intérieure du carter de frein (2') possède des saillies (7'), les évidements (8, 8') et les saillies (7, 7') engrènant à cette occasion les uns dans les autres.

9. Disque de frein selon la revendication 8, caractérisé en ce que les évidements (8, 8') sont configurés de manière concave et les saillies (7, 7') de manière convexe.

10. Procédé pour la fabrication de l'anneau de friction selon l'une des revendications 1 à 9, caractérisé en ce qu'il est fabriqué, selon un procédé courant, exclusivement en céramique, par frittage, les surfaces de friction de l'anneau de friction fritté étant à cette occasion rectifiées.

11. Procédé selon la revendication 10, caractérisé en ce que les surfaces de friction de l'anneau de friction sont rectifiées jusqu'à une rugosité (Ra) de moins de 2 microns, avantageusement moins de 0,3 microns.

12. Procédé selon la revendication 10 ou 11, caractérisé en ce que l'anneau de friction est coulé selon un procédé courant, dans un moyeu, respectivement un carter de frein, en métal léger.

FIG. 1

FIG. 2

FIG. 3